# EUROPÄISCHE PATENTANMELDUNG

(11) **EP 2 088 566 A2**
(43) Veröffentlichungstag der Anmeldung: **12.08.2009**
(21) Anmeldenummer: 09150195.7
(22) Anmeldetag: 08.01.2009
(51) Int. Cl.: G08B 13/196, B60R 25/10

(54) **Video-Überwachungssystem für ein Fahrzeug und Verfahren zum Überwachen eines Fahrzeugs**

(30) Priorität: 08.02.2008 DE 102008008478
(71) Anmelder: Siemens Aktiengesellschaft, 80333 München (DE)
(72) Erfinder: Kister, Andreas, 38122, Braunschweig (DE)

(57) **Zusammenfassung**

Die Erfindung bezieht sich u. a. auf ein Überwachungssystem (20) für ein Fahrzeug (10) zum Erzeugen und Verarbeiten von Videodaten (VD), mit zumindest einer im oder am Fahrzeug angeordneten Kamera zum Aufnehmen der Videodaten, mit mindestens einem Speicher zum Abspeichern der aufgenommenen Videodaten und mit einer mit der zumindest einen Kamera und dem zumindest einen Speicher mittelbar oder unmittelbar in Verbindung stehenden Speicherverwaltungseinrichtung (50), die derart ausgestaltet ist, dass sie die Speicherung der Videodaten nach zumindest einer vorgegebenen Speicherstrategie festlegt.

Erfindungsgemäß ist vorgesehen, dass die Speicherverwaltungseinrichtung mittelbar oder unmittelbar auch mit einem Fahrzeugsteuerungs- und/oder Betriebsleitsystem (ATC) für den Betrieb des Fahrzeugs in Verbindung steht und von diesem betriebliche Daten (B) erhält. Die Speicherverwaltungseinrichtung unterstützt zumindest zwei unterschiedliche Speicherstrategien und ist derart ausgestaltet, dass sie die jeweilige Speicherstrategie für die aufgenommenen Videodaten zumindest auch in Abhängigkeit von den jeweiligen betrieblichen Daten festlegt.

## Beschreibung

Die Erfindung bezieht sich auf ein Überwachungssystem für ein Fahrzeug zum Erzeugen und Verarbeiten von das Fahrzeug mittelbar oder unmittelbar betreffenden Videodaten, mit zumindest einer im oder am Fahrzeug angeordneten Kamera zum Aufnehmen der Videodaten, mit mindestens einem Speicher zum Abspeichern der aufgenommenen Videodaten und mit einer mit der zumindest einen Kamera und dem zumindest einen Speicher mittelbar oder unmittelbar in Verbindung stehenden Speicherverwaltungseinrichtung, die derart ausgestaltet ist, dass sie die Speicherung der Videodaten nach zumindest einer vorgegebenen Speicherstrategie festlegt.

Derartige Überwachungssysteme werden beispielsweise im Bereich des öffentlichen Nah- und Fernverkehrs eingesetzt, insbesondere zur Überwachung von Fahrgastinnenräumen. Sie dienen vorrangig dazu, Gewalttaten, terroristische Aktivitäten und dergleichen möglichst frühzeitig zu erkennen, um diese ggf. noch stoppen zu können, sowie zur Beweissicherung, um eine nachträgliche polizeiliche Aufklärung zu unterstützen.

Der Erfindung liegt die Aufgabe zugrunde, ein Überwachungssystem anzugeben, bei dem die Speicherung der Videodaten optimiert ist und die zum Speichern der Videodaten erforderlichen Speicherkapazitäten möglichst effizient genutzt werden.

Diese Aufgabe wird erfindungsgemäß durch ein Überwachungssystem mit den Merkmalen gemäß Anspruch 1 gelöst. Vorteilhafte Ausgestaltungen des erfindungsgemäßen Überwachungssystems sind in Unteransprüchen angegeben.

Danach ist erfindungsgemäß vorgesehen, dass die Speicherverwaltungseinrichtung mittelbar oder unmittelbar auch mit einem Fahrzeugsteuerungs- und/oder Betriebsleitsystem für den Betrieb des Fahrzeugs in Verbindung steht und von dem Fahrzeugsteuerungssystem betriebliche Daten erhält, die sich auf den Betrieb des Fahrzeugs beziehen, dass die Speicherverwaltungseinrichtung zumindest zwei unterschiedliche Speicherstrategien unterstützt und dass die Speicherverwaltungseinrichtung derart ausgestaltet ist, dass sie die jeweilige Speicherstrategie für die aufgenommenen Videodaten zumindest auch in Abhängigkeit von den jeweiligen betrieblichen Daten, die sich auf den Zeitpunkt der Aufnahme der jeweiligen Videodaten beziehen, festlegt.

Ein wesentlicher Vorteil des erfindungemäßen Überwachungssystems ist darin zu sehen, dass bei diesem zumindest zwei unterschiedliche Speicherstrategien zur Verfügung stehen, so dass die Speicherung der Videodaten individueller und zielgerichteter erfolgen kann als bei bisherigen Überwachungssystemen.

Ein weiterer wesentlicher Vorteil des erfindungemäßen Überwachungssystems besteht darin, dass die Speicherverwaltungseinrichtung zusätzlich auch betriebliche Daten des Fahrzeugsteuerungs- und/oder Betriebsleitsystems auswertet und diese für die Auswahl der jeweiligen Speicherstrategie zusätzlich berücksichtigt. So können beispielsweise Videodaten mit aus betrieblichen Gründen weniger Relevanz früher gelöscht werden als solche mit aus betrieblichen Gründen höherer Relevanz.

Die Speicherstrategie kann beispielsweise festlegen, wie lange Videodaten gespeichert werden sollen und mit welcher Auflösung, Bildrate und Tonqualität die erstmalige Speicherung oder nachfolgende Speicherungen nach einer etwaigen Nachbearbeitung der Videodaten durchgeführt werden sollen.

Das Fahrzeugsteuerungs- und/oder Betriebsleitsystems kann im Falle eines durch mehrere Fahrzeuge gebildeten Zuges beispielsweise durch ein Zugsteuerungs- und/oder Betriebsleitsystems gebildet sein.

Gemäß einer vorteilhaften Ausgestaltung des Überwachungssystems ist vorgesehen, dass die betrieblichen Daten einen oder mehrere der folgenden Betriebsparameter berücksichtigen, bezogen auf den Zeitpunkt der Aufnahme der jeweiligen Videodaten:
- die vom Fahrzeug befahrene Strecke,
- die Geschwindigkeit des Fahrzeugs,
- den Ort des Fahrzeugs und/oder
- Sensormesswerte von Sensoren, die dem Fahrzeugsteuerungs-und/oder Betriebsleitsystem mittelbar oder unmittelbar zur Verfügung stehen, insbesondere Wetterdaten, beispielsweise aus dem Internet, Fahrgastzahlen von einem Fahrgastzählsystem oder einem Ticketing System, sowie aus solchen Sensormesswerten abgeleitete Kenngrößen.

Gibt beispielsweise das Fahrgastzählsystem die Information, dass für die jeweilige Uhrzeit und die Fahrstrecke überdurchschnittlich viele Fahrgäste das Fahrzeug nutzen, beispielsweise bei Sportveranstaltungen oder dergleichen, so können die Videodaten mit einer größeren Bildrate und/oder einer größeren Auflösung sowie für einen längeren Zeitraum gespeichert werden als sonst.

Besonders bevorzugt umfasst die Speicherverwaltungseinrichtung eine Auswerteinrichtung, die die Videodaten nach Bildqualität und/oder Inhalt der Videodaten unter Bildung videospezifischer Daten analysiert. In diesem Falle ist die Speicherverwaltungseinrichtung vorzugsweise derart ausgestaltet, dass sie die jeweilige Speicherstrategie für die aufgenommenen Videodaten sowohl in Abhängigkeit von den jeweiligen betrieblichen Daten als auch in Abhängigkeit von den jeweiligen videospezifischen Daten festlegt. Bei dieser Ausgestaltung können beispielsweise qualitativ schlechte Aufnahmen, z. B. bei Dunkelheit aufgenommene, schneller gelöscht werden als andere; auch können beispielsweise computergestützt erkannte Gewaltszenen länger gespeichert werden als solche ohne kriminellen Zwischenfall.

Auch wird es als vorteilhaft angesehen, wenn die Speicherverwaltungseinrichtung eine Speicherprüfeinrichtung aufweist, die geeignet ist, den Speicherzustand und/oder die Speicherleistung der an die Speicherverwaltungseinrichtung angeschlossenen Speicher unter Bildung von speicherspezifischen Daten zu prüfen und die jeweilige Speicherstrategie für die aufgenommenen Videodaten zumindest auch in Abhängigkeit von den jeweiligen speicherspezifischen Daten festzulegen. Bei dieser Ausgestaltung kann beispielsweise die Speicherdauer der Videosequenzen und/oder die Dateigröße pro Videosequenz adaptiv an die aktuell vorhandenen Speicherressourcen angepasst werden, beispielsweise reduziert werden, wenn die verfügbaren Speicherkapazitäten knapp werden.

Als vorteilhaft wird es ebenfalls angesehen, wenn die Speicherverwaltungseinrichtung eine Nachbearbeitungseinrichtung umfasst, mit der sich die Videodaten unter Reduktion des Speicherbedarfs nachbearbeiten lassen. Beispielsweise reduziert die Bildnachbearbeitungseinrichtung den Speicherbedarf der Videodaten, indem sie die Bildauflösung und/oder die Bildrate und/oder die Tonqualität reduziert, je nach Speicherstrategie entweder sofort noch vor dem erstmaligen Abspeichern oder wenn vorgegebene Speicherzeiten abgelaufen sind. Eine solche Reduktion der Bildauflösung und/oder der Bildrate und/oder der Tonqualität kann einmalig oder auch mehrmals erfolgen, so dass sich Qualität der Videodaten und damit deren Speicherbedarf peu ä peu reduziert.

Gemäß einer besonders bevorzugten Ausgestaltung ist vorgesehen, dass die Speicherverwaltungseinrichtung eine streckenseitige Zentraleinrichtung sowie eine Mehrzahl an mit der streckenseitigen Zentraleinrichtung mittelbar oder unmittelbar verbundenen Steuermodulen aufweist, wobei die Steuermodule jeweils mit einer oder mehreren Kameras und mit einem oder mehreren Speichern in Verbindung stehen sowie derart ausgestaltet sind, dass sie die Videodaten in Speichern, die ihnen selbst oder anderen Steuermodulen zugeordnet sind, als Videosequenzen abspeichern und Speicherungsdaten, die ein Widerauffinden der abgespeicherten Videosequenzen ermöglichen, an die Zentraleinrichtung übermitteln, und wobei die streckenseitige Zentraleinrichtung derart ausgestaltet ist, dass sie die jeweilige Speicherstrategie für die abgespeicherten Videosequenzen in Abhängigkeit von den betrieblichen Daten festlegt. Bei dieser Ausgestaltung wird die Speicherverwaltungseinrichtung durch ein räumlich verteiltes System realisiert, das eine dynamisch verteilte Speicherung der Videodaten ermöglicht.

Vorzugsweise sind die Steuermodule derart ausgestaltet, dass sie zusätzlich die videospezifischen Daten und/oder die speicherspezifischen Daten der von ihnen gespeicherten Videodaten an die Zentraleinrichtung übermitteln und dass die streckenseitige Zentraleinrichtung derart ausgestaltet ist, dass sie die jeweilige Speicherstrategie für die abgespeicherten Videosequenzen auch in Abhängigkeit von den empfangenen videospezifischen Daten und/oder den speicherspezifischen Daten festlegt. Bei einer solchen Ausgestaltung können die Videodaten dezentral gespeichert werden, wobei trotzdem eine zentrale Speicherstrategieüberwachung durch die Zentraleinrichtung sichergestellt bleibt.

Die streckenseitige Zentraleinrichtung weist bevorzugt eine Datenstruktur auf, in der sie für jede abgespeicherte Videosequenz zumindest die Speicherungsinformationen und die jeweilige Speicherstrategie als Einträge abspeichert. Eine solche Datenstruktur kann beispielsweise durch eine Speichertabelle und die Einträge durch Tabelleneinträge gebildet sein.

Zumindest eines der Steuermodule ist bevorzugt im oder am Fahrzeug angeordnet, um beispielsweise die Videodaten vor Ort im Fahrzeug speichern zu können; in diesem Falle werden vorzugsweise für jede Videosequenz jeweils die Speicherungsdaten unter Nutzung einer Funkverbindung an die Zentraleinrichtung übermittelt.

Wenn die Videodaten aus Sicherheitsgründen außerhalb des Fahrzeugs gespeichert werden sollen, um beispielsweise nach einem terroristischen Anschlag noch eine Videoauswertung durch Polizeibehörden zu ermöglichen, so ist vorzugsweise zumindest eines der Steuermodule ein streckenseitiges Steuermodul, das die Videodaten aus dem Fahrzeug beispielsweise über eine Funkverbindung erhält.

Die Erfindung bezieht sich außerdem auf Verfahren zum Erzeugen und Verarbeiten von Videodaten, die ein Fahrzeug mittelbar oder unmittelbar betreffen, wobei bei dem Verfahren mit zumindest einer im oder am Fahrzeug angeordneten Kamera Videodaten aufgenommen werden, mit mindestens einem Speicher die aufgenommenen Videodaten abgespeichert werden und die Speicherung der Videodaten nach zumindest einer vorgegebenen Speicherstrategie festlegt wird.

Bei einem solchen Verfahren ist erfindungsgemäß vorgesehen, dass eine von zumindest zwei unterschiedlichen Speicherstrategien ausgewählt wird, und zwar zumindest auch in Abhängigkeit von den jeweiligen betrieblichen Daten des Fahrzeugs. Die Speicherstrategie kann beispielsweise festlegen, wie lange Videodaten gespeichert werden sollen und mit welcher Auflösung, Bildrate und Tonqualität die erstmalige Speicherung der Videodaten oder nachfolgende Speicherungen nach einer etwaigen Nachbearbeitung der Videodaten durchgeführt werden sollen.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Überwachungssystem verwiesen, da die Vorteile und auch die vorteilhaften Ausgestaltungen des erfindungemäßen Verfahrens denen des erfindungemäßen Überwachungssystems im Wesentlichen entsprechen.

Die Erfindung wird nachfolgend anhand von Ausführungsbeispielen näher erläutert; dabei zeigen beispielhaft
- Figuren 1,2: ein erstes Ausführungsbeispiel für ein erfin- dungsgemäßes Überwachungssystem mit einer Aus- werteinrichtung,
- Figuren 3,4: ein zweites Ausführungsbeispiel für ein erfin- dungsgemäßes Überwachungssystem, bei dem die Speicherverwaltungseinrichtung zusätzlich mit einer Auswerteinrichtung ausgestattet ist,
- Figuren 5,6: ein drittes Ausführungsbeispiel für ein erfin- dungsgemäßes Überwachungssystem, bei dem die Speicherverwaltungseinrichtung zusätzlich mit einer Nachbearbeitungseinrichtung ausgestattet ist,
- Figur 7: ein viertes Ausführungsbeispiel für ein erfin- dungsgemäßes Überwachungssystem, bei dem die Speicherverwaltungseinrichtung zusätzlich mit einer Speicherprüfeinrichtung ausgestattet ist,
- Figuren 8,9: ein fünftes Ausführungsbeispiel für ein erfin- dungsgemäßes Überwachungssystem, bei dem die Speicherverwaltungseinrichtung mit einer Nach- bearbeitungseinrichtung, einer Speicherprüf- einrichtung und einer Auswerteinrichtung aus- gestattet ist,
- Figur 10: ein sechstes Ausführungsbeispiel für ein er- findungsgemäßes Überwachungssystem, bei dem eine Auswerteinrichtung der Speicherverwal- tungseinrichtung dezentral realisiert ist,
- Figur 11: ein siebentes Ausführungsbeispiel für ein er- findungsgemäßes Überwachungssystem, bei dem eine Nachbearbeitungseinrichtung der Speicher- verwaltungseinrichtung dezentral realisiert ist und
- Figur 12: ein achtes Ausführungsbeispiel für ein erfin- dungsgemäßes Überwachungssystem, bei dem eine Speicherprüfeinrichtung der Speicherverwal- tungseinrichtung dezentral realisiert ist.

In den Figuren werden der Übersicht halber für identische oder vergleichbare Komponenten stets dieselben Bezugszeichen verwendet.

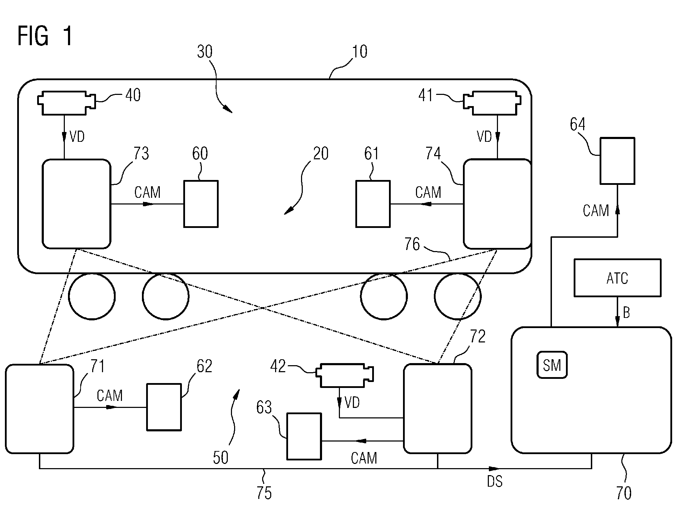

In der Figur 1 ist ein Fahrzeug 10 dargestellt, bei dem es sich beispielsweise um ein Schienenfahrzeug oder auch um ein schienenungebundenes Fahrzeug, wie beispielsweise einen öffentlichen Autobus oder dergleichen, handeln kann. Das Fahrzeug 10 wird mittels eines Überwachungssystems 20 überwacht, und zwar sowohl im Innenraum 30 des Fahrzeugs 10 als auch von außen.

Das Überwachungssystem 20 weist eine Vielzahl an Kameras auf, die in der Figur 1 mit den Bezugszeichen 40, 41 und 42 bezeichnet sind. Die beiden Kameras 40 und 41 sind im Innenraum 30 des Fahrzeugs 10 angeordnet und bilden somit fahrzeugseitige Kameras. Die Kamera 42 ist ortsfest an der Strecke angeordnet und bildet somit eine streckenseitige Kamera.

Mit den Kameras 40, 41 und 42 steht eine Speicherverwaltungseinrichtung 50 in Verbindung, die das Abspeichern der von den Kameras gebildeten Videodaten verwaltet bzw. organisiert. An die Speicherverwaltungseinrichtung 50 ist eine Vielzahl an Speichern angeschlossen, die in der Figur 1 mit dem Bezugszeichen 60, 61, 62, 63 und 64 gekennzeichnet sind. Die beiden Speicher 60 und 61 sind im oder am Fahrzeug 10 angeordnet und bilden somit fahrzeugseitige Speicher. Die Speicher 62, 63 und 64 sind streckenseitige Speicher und somit beispielsweise ortsfest.

Wie sich in der Figur 1 erkennen lässt, ist die Speicherverwaltungseinrichtung 50 durch eine streckenseitige Zentraleinrichtung 70 sowie durch Steuermodule 71, 72, 73 und 74 gebildet. Die Steuermodule 73 und 74 sind im oder am Fahrzeug 10 angeordnet und bilden fahrzeugseitige Steuermodule. Die Steuermodule 71 und 72 sind außerhalb des Fahrzeugs 10 an der Strecke angeordnet und bilden streckenseitige Steuermodule.

An jedes der Steuermodule 71, 72, 73 und 74 ist vorzugsweise jeweils mindestens ein Speicher angeschlossen, so dass jedes Steuermodul die Möglichkeit hat, Videodaten vor Ort zu speichern. Die Steuermodule können dabei Videodaten abspeichern, die von unmittelbar an das jeweilige Steuermodul angeschlossenen Kameras stammen, wie dies beispielsweise bei den Steuermodulen 72, 73 und 74 der Fall sein kann; alternativ können die Steuermodule auch Videodaten abspeichern, die nicht von unmittelbar angeschlossenen ("eigenen") Kameras stammen, sondern von anderen Steuermodulen geliefert werden; dies betrifft beispielsweise das Steuermodul 71, an das unmittelbar keine eigene Kamera angeschlossen ist. Das Steuermodul 71 speichert somit ausschließlich Videodaten, die über andere Steuermodule von entfernt liegenden Kameras geliefert werden.

Vorzugsweise können alle Steuermodule auch die Videodaten anderer Kameras abspeichern, sei es zusätzlich zu den Videodaten der eigenen Kamera oder alternativ zu diesen.

An die Speicherverwaltungseinrichtung 50 ist ein Zugsteuerungs- und/oder Betriebsleitsystem ATC angeschlossen, das betriebliche Daten B, die den Betrieb des Fahrzeugs 10 betreffen, an die Speicherverwaltungseinrichtung 50 überträgt. Bei dem Ausführungsbeispiel gemäß Figur 1 ist das Zugsteuerungs-und/oder Betriebsleitsystem ATC an die streckenseitige Zentraleinrichtung 70 angeschlossen; alternativ könnte dieser Anschluss auch an einem anderen Steuermodul der Speicherverwaltungseinrichtung 50 erfolgen.

Die Steuermodule 71 bis 74 sowie die streckenseitige Zentraleinrichtung 70 stehen untereinander über Datenleitungen 75 sowie über Funkverbindungen 76 in Verbindung, so dass ein Austausch von Videodaten sowie ein Austausch sonstiger Steuerdaten oder von Steuersignalen untereinander möglich ist.

In der Speicherverwaltungseinrichtung 50 ist ein Speicherstrategiemodul SM implementiert, in dem zumindest zwei unterschiedliche Speicherstrategien abgespeichert sind. Das Speicherstrategiemodul SM kann beispielsweise in der streckenseitigen Zentraleinrichtung 70 angeordnet sein, wie dies beispielhaft die Figur 1 zeigt; alternativ kann es auch verteilt abgespeichert sein, und zwar auf die Komponenten der Speicherverwaltungseinrichtung 50 verteilt, also in Teilen oder komplett auch in den Steuermodulen 71 bis 74 oder den Speichern 60-64.

### Das Überwachungssystem 20 lässt sich beispielsweise wie folgt betreiben:

Mit den Videokameras 40, 41 und 42 werden Videodaten VD erzeugt, die sich auf dem Innenraum 30 des Fahrzeugs 10 oder auf den von außen sichtbaren Betrieb des Fahrzeugs 10 beziehen. Die Videodaten VD werden zu dem jeweils zugeordneten Steuermodul 72, 73 und 74 übertragen und in dem dem jeweiligen Steuermodul zugeordneten Speicher 61, 61 oder 62 als Videosequenzen CAM (CAM1, CAM2, ... ) abgespeichert.

Die Steuermodule erzeugen nachfolgend Speicherungsdaten DS, die ein Wiederauffinden der abgespeicherten Videosequenzen CAM ermöglichen. In der streckenseitigen Zentraleinrichtung 70 liegt somit die Information vor, welche Videosequenzen in welchen Speichern abgespeichert sind. Die Zentraleinrichtung 70 hat nun die Möglichkeit, das Abspeichern der Videosequenzen CAM in den insgesamt verfügbaren Speichern 60 bis 64 möglichst effizient zu organisieren und solche Videosequenzen zu löschen, die nicht mehr benötigt werden. Um eine solche Organisation der abgespeicherten Videosequenzen möglichst effizient zu ermöglichen, weist die Zentraleinrichtung 70 den abgespeicherten Videosequenzen CAM eine Speicherstrategie zu, die zumindest auch die betrieblichen Daten B des Zugsteuerungs- und/oder Betriebsleitsystems ATC berücksichtigen.

Die betrieblichen Daten B des Zusteuerungs- und/oder Betriebsleitsystems ATC können beispielsweise die vom Fahrzeug zum Zeitpunkt der jeweiligen Aufnahme der Videodaten befahrene Strecke, die jeweilige Geschwindigkeit des Fahrzeugs, den jeweiligen Ort des Fahrzeugs und/oder sonstige Sensormesswerte von Sensoren, die dem Zusteuerungs- und/oder Betriebsleitsystem ATC mittelbar oder unmittelbar zur Verfügung stehen, angeben.

Die Zentraleinrichtung 70 hat somit beispielsweise die Möglichkeit, die Videosequenzen CAM mit unterschiedlichen Speicherstrategien zu speichern: Beispielsweise können solche Videosequenzen, die sich auf Fahrzeugstrecken mit einer relativ hohen Kriminalitätsrate beziehen, für einen längeren Zeitraum abgespeichert werden als Videosequenzen, die von "ungefährlichen" Strecken stammen. Eine solche Unterscheidung der Speicherdauer nach der jeweiligen Fahrtstrecke kann polizeiliche Ermittlungen unterstützen.

Zusätzlich oder alternativ kann die Zentraleinrichtung 70 auch die Aufnahmeuhrzeit, den jeweiligen Wochentag die jeweilige Kalenderwoche und/oder die Jahreszeit der jeweiligen Videosequenz berücksichtigen und beispielsweise solche Videosequenzen, die zu Tages- bzw. Nachtzeiten mit relativ hoher Zwischenfallrate aufgenommen worden sind, länger abspeichern als andere Videosequenzen, die zu dem gegenüber unkritischen Uhrzeiten entstanden sind.

Alternativ oder zusätzlich kann die Zentraleinrichtung 70 auch den jeweiligen Ort des Fahrzeugs bei der Auswahl der Speicherstrategie der jeweiligen Videosequenz berücksichtigen und beispielsweise solche Videosequenzen, die an gefährlicheren Abschnitten oder gefährlicheren Orten einer Fahrstrecke aufgenommen worden sind, für einen längeren Zeitraum speichern als andere Videosequenzen, die in ungefährlicheren Abschnitten oder an ungefährlicheren Orten der befahrenen Fahrstrecke entstanden sind.

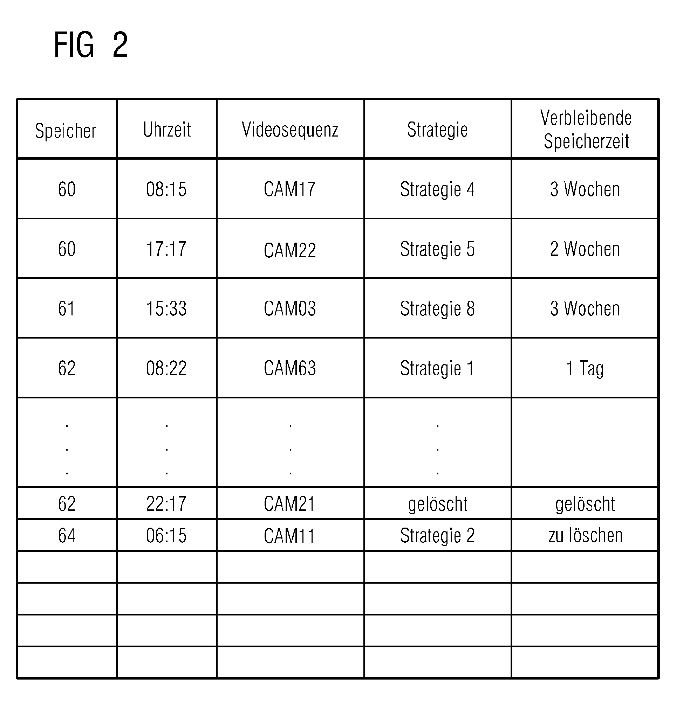

Die Figur 2 zeigt beispielhaft die Arbeitsweise des Speicherstrategiemoduls SM. Man erkennt, dass das Speicherstrategiemodul SM die den jeweiligen Videosequenzen zugeordneten Strategien beispielsweise in Form einer Speichertabelle 100 verwaltet und einer jeden abgespeicherten Videosequenz jeweils einen Tabelleneintrag zuordnet, in dem die zugeordnete Speicherstrategie eingetragen ist. So lässt sich in der Figur 2 beispielsweise ablesen, dass die Videosequenz CAM17 zum Zeitpunkt 8:30 Uhr aufgenommen worden ist und in dem Speicher 60 abgespeichert wurde. Der Videosequenz CAM17 ist dabei die Speicherstrategie Nr. 4 zugeordnet, woraus sich beispielsweise eine noch verbleibende Speicherzeit von 3 Wochen ergibt.

In entsprechender Weise sind in der Speichertabelle 100 auch für die Videosequenzen CAM22, CAM03, CAM63, CAM21 und CAM11 die jeweiligen Zeitpunkte der Aufnahme, der jeweilige Speicher, die zugeordnete Speicherstrategie und die noch verbleibende Speicherzeit ablesbar.

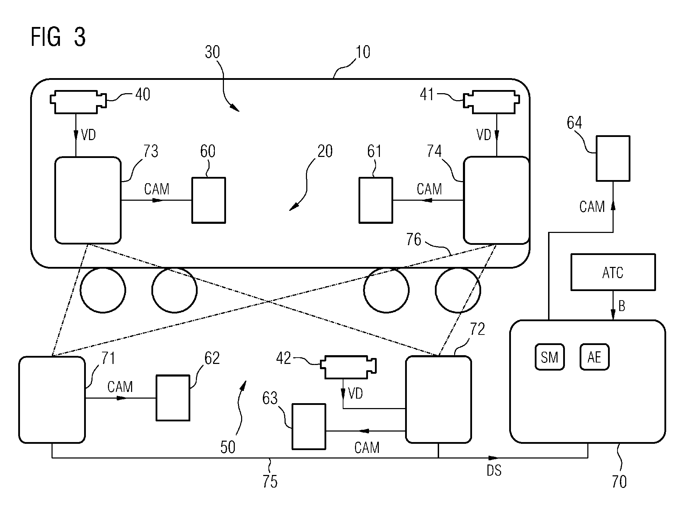

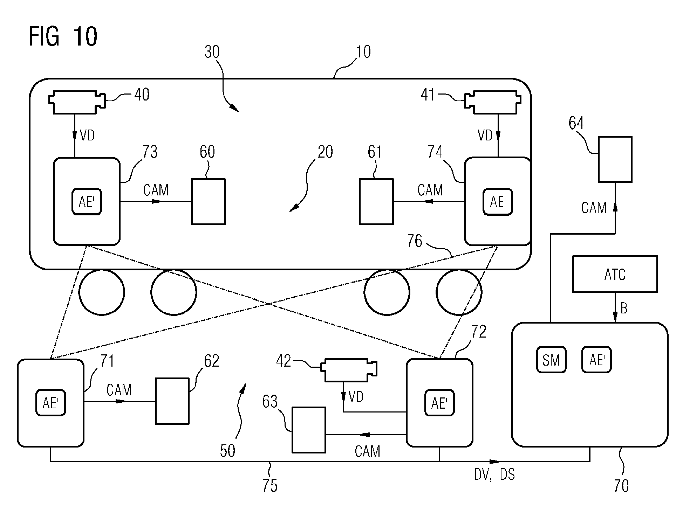

Die Figur 3 zeigt ein zweites Ausführungsbeispiel für ein Überwachungssystem 20. Das Überwachungssystem 20 gemäß Figur 3 weist - im Unterschied zu dem Ausführungsbeispiel gemäß Figur 1 - zusätzlich eine Auswerteinrichtung AE auf, die zentral in der Zentraleinrichtung 70 implementiert ist. Alternativ könnte die Auswerteinrichtung AE auch verteilt in anderen Komponenten der Speicherverwaltungseinrichtung 50 integriert sein, wie weiter unten im Zusammenhang mit der Figur 10 noch näher erläutert werden wird.

Die Aufgabe der Auswerteinrichtung AE besteht darin, die Videosequenzen CAM nach Bildqualität und/oder Inhalt unter Bildung videospezifischer Daten zu analysieren. Beispielsweise können die videospezifischen Daten angeben, dass die jeweilige Videosequenz eine nur sehr schlechte Bildqualität aufweist und insofern nur sehr schlecht zu verwerten sein wird. Auch können die videospezifischen Daten beispielsweise anzeigen, dass in der jeweiligen Videosequenz mit hoher Wahrscheinlichkeit eine Gewalttätigkeit bzw. Straftat dokumentiert worden ist.

Die videospezifischen Daten ermöglichen es beispielsweise, die Festlegung der Speicherdauer der jeweiligen Videosequenz in Abhängigkeit von deren Relevanz und/oder deren Verwertbarkeit festzulegen und besonders wichtige Videosequenzen und/oder besonders gut auswertbare Videosequenzen länger zu speichern als weniger gut auswertbare und/oder solche, die inhaltlich weniger relevant scheinen. Es ist somit möglich, die an die Speicherverwaltungseinrichtung 50 angeschlossenen Speicher 60 bis 64 noch effizienter als bei dem Ausführungsbeispiel gemäß der Figur 1 zu nutzen, weil es zusätzlich möglich ist, die Speicher auch inhaltsselektiv von "Datenmüll" zu befreien.

Die Figur 3 zeigt beispielhaft, wie die Zentraleinrichtung 70 die Zuordnung der jeweiligen Speicherstrategie verwalten kann, wenn neben den betrieblichen Daten B des Zugsteuerungs-und/oder Betriebsleitsystems ATC auch die videospezifischen Daten berücksichtig werden. Man erkennt, dass in der Speichertabelle 100 eine zusätzliche Spalte vorhanden ist, die sich auf die videospezifischen Daten bezieht und beispielsweise angibt, dass eine Videosequenz mangels Qualität nicht verwertbar sein wird und dass beispielsweise andere Videosequenzen Gewaltszenen zeigen.

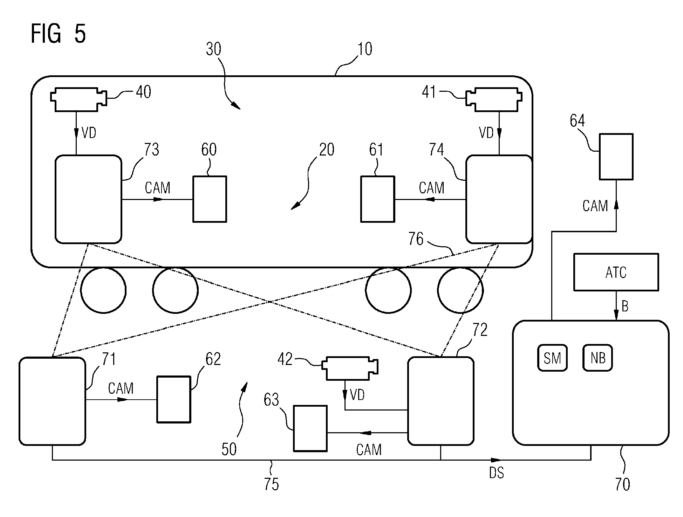

In der Figur 5 ist ein drittes Ausführungsbeispiel für ein Überwachungssystem 20 gezeigt. Bei dem Überwachungssystem 20 ist in der Zentraleinrichtung 70 eine Nachbearbeitungseinrichtung NB implementiert. Die Funktion der Nachbearbeitungseinrichtung NB besteht darin, die Videosequenzen CAM, die in den Speichern 60 bis 64 abgespeichert worden sind, unter Berücksichtigung der jeweils zugeordneten Speicherstrategie sowie unter Reduktion des Speicherbedarfs nachzubearbeiten.

Ist beispielsweise bei einer Speicherstrategie festgelegt, dass nach Ablauf einer Speicherzeit von 2 Wochen die jeweilige Videosequenz teilgelöscht werden soll, in dem entweder die Bildrate reduziert und/oder die Auflösung der Videosequenz reduziert wird, so wird die Nachbearbeitungseinrichtung NB nach Ablauf der jeweiligen Zeitspanne die entsprechende Videosequenz CAM aufrufen und in entsprechender Weise unter Reduktion des Speicherbedarfs nachbearbeiten. Anschließend wird die Nachbearbeitungseinrichtung NB die in dieser Weise datenmäßig reduzierte Videosequenz entweder in demselben Speicher, in dem die Videosequenz bereits vorher abgespeichert war, oder in einem anderen an die Speicherverwaltungseinrichtung 50 angeschlossenen Speicher abspeichern.

In der beschriebenen Weise lässt sich in effizienter Weise der für eine Speicherung der Videosequenzen erforderliche Speicherbedarf reduzieren. Die Nachbearbeitungseinrichtung NB ermöglicht es nämlich, Abstufungen zwischen einem vollständigen Weiterspeichern der Videosequenzen und einem vollständigen Löschen der Videosequenzen bereitzustellen. Stellt sich beispielsweise heraus, dass eine bestimmte Videosequenz mit großer Wahrscheinlichkeit nicht mehr benötigt werden wird, aber aus Sicherheitsgründen dennoch zumindest für eine weitere Zeitspanne gespeichert bleiben sollte, so lässt sich durch die beschriebene Datenreduktion ein Kompromiss hinsichtlich des Ziels einer möglichst langfristigen Datenspeicherung und der Anforderung an eine möglichst effiziente Speichernutzung finden.

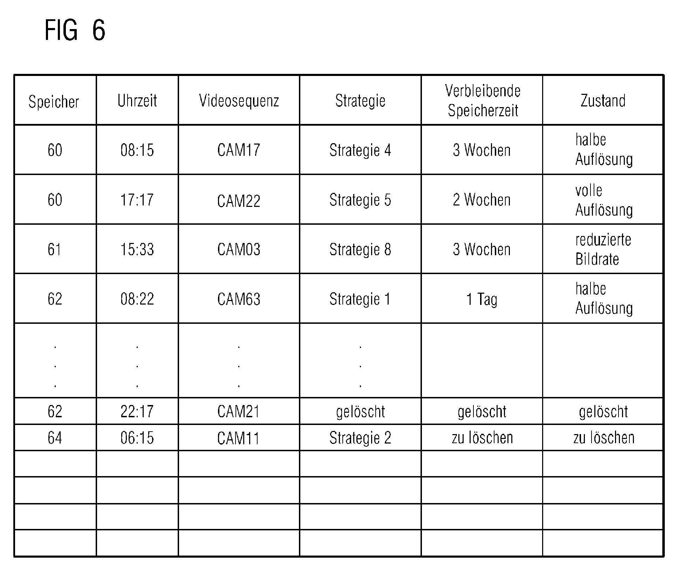

Die Figur 6 zeigt beispielhaft, wie die Zentraleinrichtung 70 bei Vorhandensein der Nachbearbeitungseinrichtung NB die Videosequenzen CAM in der Speichertabelle 100 verwalten kann. Man erkennt, dass zu jeder Videosequenz nicht nur die jeweilige Speicherstrategie, sondern auch die jeweils noch verbleibende Speicherdauer sowie die vorhandene Videoqualität angegeben werden. Beispielsweise lässt sich der Speichertabelle 100 entnehmen, dass die Videosequenz CAM17 nur noch die halbe Auflösung aufweist und nach 3 Wochen gelöscht werden soll. Die Videosequenz CAM22 weist hingegen noch die volle Auflösung auf und wird in dieser Form noch 2 Wochen gespeichert bleiben. Die Videosequenz CAM03 weist aufgrund der Interaktion der Nachbearbeitungseinrichtung NB bereits eine reduzierte Bildrate auf, so dass sie ebenfalls in ihrem Speicherbedarf bereits reduziert ist.

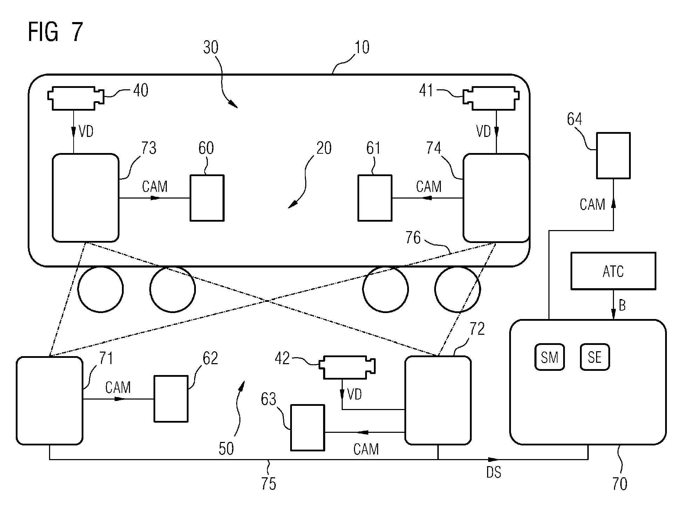

In der Figur 7 ist ein viertes Ausführungsbeispiel für ein Überwachungssystem 20 dargestellt. Das Überwachungssystem 20 weist zusätzlich eine Speicherprüfeinrichtung SE auf. Die Speicherprüfeinrichtung SE hat die Aufgabe, den Speicherzustand und/oder die Speicherleistung der an die Speicherverwaltungseinrichtung 50 angeschlossenen Speicher 60 bis 64 zu prüfen und entsprechende speicherspezifische Daten zu erzeugen. Liegen solche speicherspezifischen Daten vor, so kann die Zentraleinrichtung 70 bei der Strategiezuordnung auch zusätzlich diese Daten verwenden und beispielsweise die den einzelnen Videosequenzen zur Verfügung stehenden Speicherzeiten entsprechend wählen. Beispielsweise kann die Zentraleinrichtung 70 die Speicherzeiten der Videosequenzen reduzieren, wenn sich erkennen lässt, dass nicht mehr ausreichend Speicherkapazitäten zur Verfügung stehen werden; in entsprechender Weise kann die Zentraleinrichtung 70 bei der Bemessung der Speicherzeiten großzügiger sein, wenn noch ausreichend Speicherkapazitäten vorhanden sind.

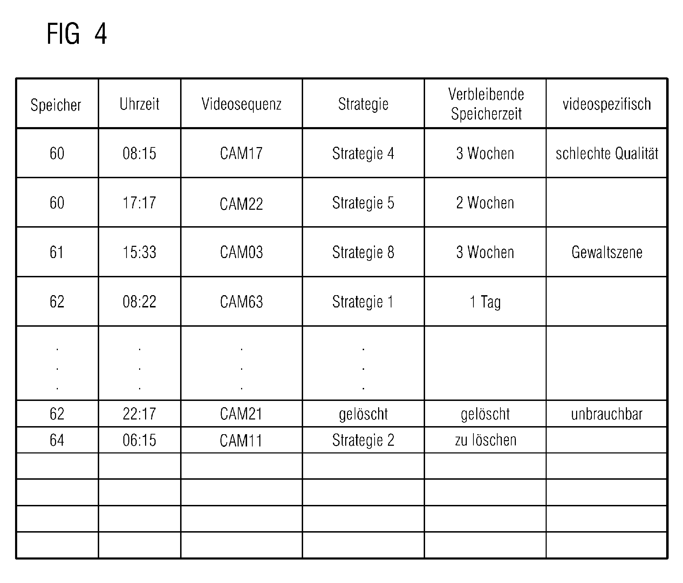

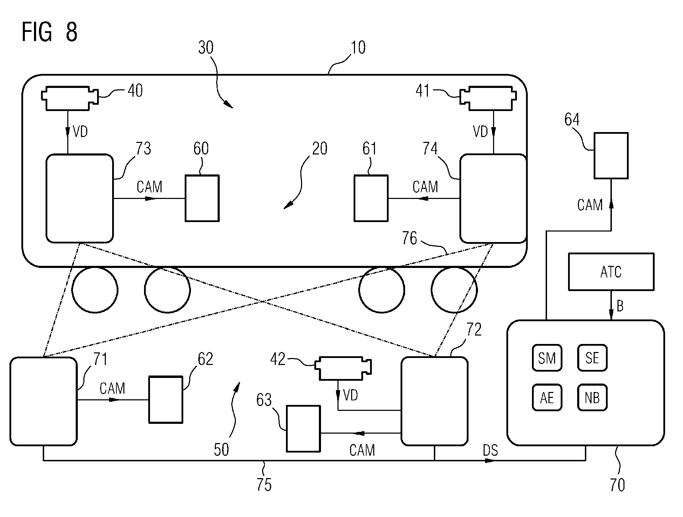

Die Figur 8 zeigt ein fünftes Ausführungsbeispiel für ein Überwachungssystem 20. Das Überwachungssystem 20 weist eine Nachbearbeitungseinrichtung NB, eine Speicherprüfeinrichtung SE sowie eine Auswerteinrichtung AE auf. Bezüglich der Funktionsweisen der Nachbearbeitungseinrichtung NB, der Speicherprüfeinrichtung SE und der Auswerteinrichtung AE sei auf die obigen Ausführungen im Zusammenhang mit den Figuren 3 bis 7 verwiesen, in deren Zusammenhang die Funktionsweise der entsprechenden Komponenten bereits erläutert worden war.

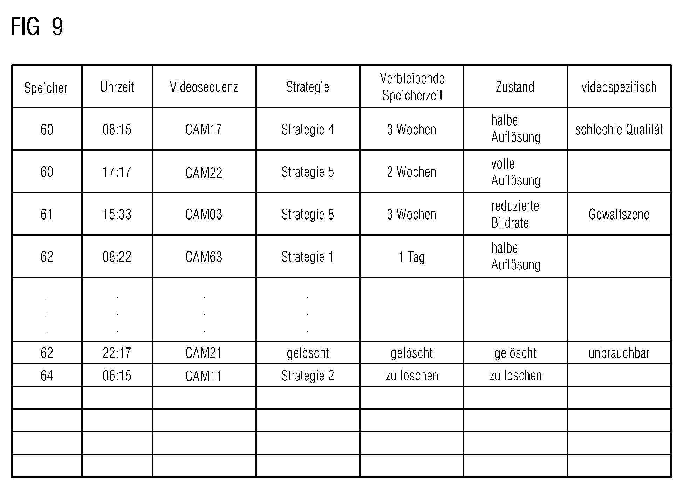

Die Figur 9 zeigt beispielhaft, wie bei der Speicherverwaltungseinrichtung 50 die Speichertabelle 100 aussehen kann. Man erkennt, dass pro Videosequenz nicht nur die zugeordnete Speicherstrategie, sondern auch die noch verbleibende Speicherzeit, die noch vorhandene Videoqualität sowie auch der Inhalt der jeweiligen Videosequenz angegeben sind. Bei dem Ausführungsbeispiel gemäß der Figur 8 lässt sich aufgrund der Vielzahl der berücksichtigten Parameter eine besonders effiziente Nutzung der der Speicherverwaltungseinrichtung 50 zur Verfügung stehenden Speicherressourcen erreichen.

Die Figur 10 zeigt ein sechstes Ausführungsbeispiel für ein Überwachungssystem 20. Das Überwachungssystem 20 gemäß der Figur 10 entspricht weitgehend dem zweiten Ausführungsbeispiel gemäß Figur 3, weil nämlich die Speicherverwaltungseinrichtung 50 ebenfalls mit einer Auswerteinrichtung AE ausgestattet ist. Im Unterschied zu dem Ausführungsbeispiel gemäß Figur 3 ist die Auswerteinrichtung AE jedoch nicht allein in der Zentraleinrichtung 70 implementiert, sondern in den einzelnen Komponenten der Speicherverwaltungseinrichtung 50 verteilt. Konkret ist die Auswerteinrichtung AE durch Auswerteinrichtungsmodule AE' gebildet, die in einzelnen oder in allen der Steuermodule 71 bis 74 und/oder der Zentraleinrichtung 70 implementiert sind. Die Auswerteinrichtungsmodule AE' erzeugen für ihre Videosequenzen jeweils videospezifische Daten DV, die zu der Zentraleinrichtung 70 übertragen werden. Die videospezifischen Daten DV werden von der Zentraleinrichtung 70 für die Festlegung der Speicherstrategien mit herangezogen.

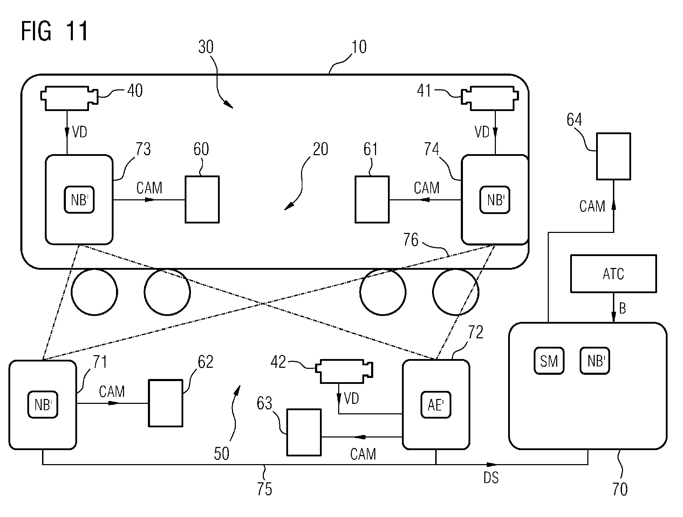

Die Figur 11 zeigt ein Ausführungsbeispiel für ein Überwachungssystem 20 mit einer "verteilten" Nachbearbeitungseinrichtung, die durch Nachbearbeitungseinrichtungsmodule NB' gebildet ist. Die Nachbearbeitungseinrichtungsmodule NB' ermöglichen eine Nachbearbeitung vor Ort durch die Steuermodule 71-74.

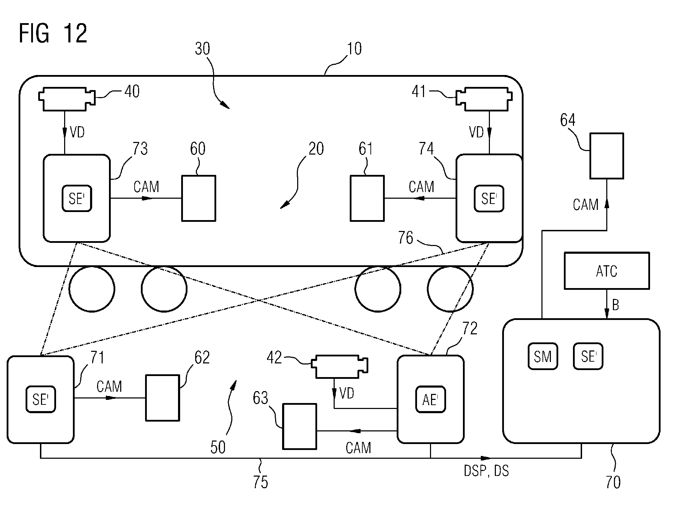

Die Figur 12 zeigt ein Ausführungsbeispiel für ein Überwachungssystem 20 mit einer "verteilten" Speicherprüfeinrichtung, die durch Speicherprüfeinrichtungsmodule SE' gebildet ist. Die Speicherprüfeinrichtungsmodule SE' erzeugen speicherspezifische Daten DSP für die Zentraleinrichtung 70, die diese für die Festlegung der Speicherstrategien mit heranzieht.

## Patentansprüche

1. Überwachungssystem (20) für ein Fahrzeug (10) zum Erzeugen und Verarbeiten von das Fahrzeug mittelbar oder unmittelbar betreffenden Videodaten (VD),
- mit zumindest einer im oder am Fahrzeug angeordneten Kamera (40, 41, 42) zum Aufnehmen der Videodaten,
- mit mindestens einem Speicher (60, 61, 62, 63, 64) zum Abspeichern der aufgenommenen Videodaten und
- mit einer mit der zumindest einen Kamera und dem zumindest einen Speicher mittelbar oder unmittelbar in Verbindung stehenden Speicherverwaltungseinrichtung (50), die derart ausgestaltet ist, dass sie die Speicherung der Videodaten nach zumindest einer vorgegebenen Speicherstrategie festlegt,
**dadurch gekennzeichnet, dass**
- die Speicherverwaltungseinrichtung mittelbar oder unmittelbar auch mit einem Fahrzeugsteuerungs- und/oder Betriebsleitsystem (ATC) für den Betrieb des Fahrzeugs in Verbindung steht und von dem Fahrzeugsteuerungssystem und/oder Betriebsleitsystem betriebliche Daten (B) erhält, die sich auf den Betrieb des Fahrzeugs beziehen,
- die Speicherverwaltungseinrichtung zumindest zwei unterschiedliche Speicherstrategien unterstützt und
- die Speicherverwaltungseinrichtung derart ausgestaltet ist, dass sie die jeweilige Speicherstrategie für die aufgenommenen Videodaten zumindest auch in Abhängigkeit von den jeweiligen betrieblichen Daten, die sich auf den Zeitpunkt der Aufnahme der jeweiligen Videodaten beziehen, festlegt.

2. Überwachungssystem nach Anspruch 1,
**dadurch gekennzeichnet, dass** die betrieblichen Daten einen oder mehrere der folgenden Betriebsparameter berücksichtigen, bezogen auf den Zeitpunkt der Aufnahme der jeweiligen Videodaten:
- vom Fahrzeug befahrene Strecke,
- Geschwindigkeit des Fahrzeugs,
- Ort des Fahrzeugs und/oder
- Sensormesswerte von Sensoren, die dem Fahrzeugsteuerungs-und/oder Betriebsleitsystem mittelbar oder unmittelbar zur Verfügung stehen, insbesondere Wetterdaten, beispielsweise aus dem Internet, Fahrgastzahlen von einem Fahrgastzählsystem oder einem Ticketing System, sowie aus solchen Sensormesswerten abgeleitete Kenngrößen.

3. Überwachungssystem nach Anspruch 1 oder 2,
**dadurch gekennzeichnet, dass**
- die Speicherverwaltungseinrichtung eine Auswerteinrichtung (AE, AE') umfasst, die die Videodaten nach Bildqualität und/oder Inhalt der Videodaten unter Bildung videospezifischer Daten analysiert, und
- die Speicherverwaltungseinrichtung derart ausgestaltet ist, dass sie die jeweilige Speicherstrategie für die aufgenommenen Videodaten sowohl in Abhängigkeit von den jeweiligen betrieblichen Daten als auch in Abhängigkeit von den jeweiligen videospezifischen Daten festlegt.

4. Überwachungssystem nach einem der voranstehenden Ansprüche,
**dadurch gekennzeichnet, dass**
die Speicherverwaltungseinrichtung eine Speicherprüfeinrichtung (SE, SE') aufweist, die geeignet ist, den Speicherzustand und/oder die Speicherleistung der an die Speicherverwaltungseinrichtung angeschlossenen Speicher unter Bildung von speicherspezifischen Daten (DSP) zu prüfen und die jeweilige Speicherstrategie für die aufgenommenen Videodaten zumindest auch in Abhängigkeit von den jeweiligen speicherspezifischen Daten festzulegen.

5. Überwachungssystem nach einem der voranstehenden Ansprüche,
**dadurch gekennzeichnet, dass**
die Speicherverwaltungseinrichtung eine Nachbearbeitungseinrichtung (NB, NB') umfasst, mit der sich die Videodaten unter Reduktion des Speicherbedarfs nachbearbeiten lassen.

6. Überwachungssystem nach Anspruch 5,
**dadurch gekennzeichnet, dass**
die Nachbearbeitungseinrichtung den Speicherbedarf der Videodaten reduziert, indem sie die Bildauflösung und/oder die Bildrate und/oder die Tonqualität reduziert.

7. Überwachungssystem nach einem der voranstehenden Ansprüche,
**dadurch gekennzeichnet, dass**
- die Speicherverwaltungseinrichtung eine streckenseitige Zentraleinrichtung (70) sowie eine Mehrzahl an mit der streckenseitigen Zentraleinrichtung mittelbar oder unmittelbar verbundenen Steuermodulen (71, 72, 73, 74) aufweist,
- wobei die Steuermodule jeweils mit einer oder mehreren Kameras und mit einem oder mehreren Speichern in Verbindung stehen sowie derart ausgestaltet sind, dass sie die Videodaten in Speichern, die ihnen selbst oder anderen Steuermodulen zugeordnet sind, als Videosequenzen abspeichern und Speicherungsdaten (DS), die ein Widerauffinden der abgespeicherten Videosequenzen ermöglichen, an die Zentraleinrichtung übermitteln, und
- wobei die streckenseitige Zentraleinrichtung derart ausgestaltet ist, dass sie die jeweilige Speicherstrategie für die abgespeicherten Videosequenzen in Abhängigkeit von den betrieblichen Daten festlegt.

8. Überwachungssystem nach Anspruch 7,
**dadurch gekennzeichnet, dass**
- die Steuermodule derart ausgestaltet sind, dass sie zusätzlich die videospezifischen Daten und/oder die speicherspezifischen Daten der von ihnen gespeicherten Videodaten an die Zentraleinrichtung übermitteln, und
- die streckenseitige Zentraleinrichtung derart ausgestaltet ist, dass sie die jeweilige Speicherstrategie für die abgespeicherten Videosequenzen auch in Abhängigkeit von den empfangenen videospezifischen Daten und/oder den speicherspezifischen Daten festlegt.

9. Überwachungssystem nach Anspruch 7 oder 8,
**dadurch gekennzeichnet, dass**
die streckenseitige Zentraleinrichtung eine Datenstruktur aufweist, in der sie für jede abgespeicherte Videosequenz zumindest die Speicherungsinformationen und die jeweilige Speicherstrategie als Einträge abspeichert.

10. Überwachungssystem nach Anspruch 9,
**dadurch gekennzeichnet, dass**
- die Datenstruktur durch eine Speichertabelle (100) und die Einträge durch Tabelleneinträge gebildet sind.

11. Überwachungssystem nach einem der voranstehenden Ansprüche 7-10,
**dadurch gekennzeichnet, dass** zumindest eines der Steuermodule im oder am Fahrzeug angeordnet ist und für jede Videosequenz jeweils die Speicherungsdaten unter Nutzung einer Funkverbindung an die Zentraleinrichtung übermittelt.

12. Überwachungssystem nach einem der voranstehenden Ansprüche 7-11,
**dadurch gekennzeichnet, dass** zumindest eines der Steuermodule ein streckenseitiges Steuermodul ist, das die Videodaten der zugeordneten Kamera bzw. der zugeordneten Kameras über eine Funkverbindung erhält.

13. Verfahren zum Erzeugen und Verarbeiten von Videodaten, die ein Fahrzeug mittelbar oder unmittelbar betreffen, wobei bei dem Verfahren
- mit zumindest einer im oder am Fahrzeug angeordneten Kamera Videodaten aufgenommen werden,
- mit mindestens einem Speicher die aufgenommenen Videodaten abgespeichert werden und
- die Speicherung der Videodaten nach zumindest einer vorgegebenen Speicherstrategie festlegt wird,
**dadurch gekennzeichnet, dass**
eine von zumindest zwei unterschiedlichen Speicherstrategien ausgewählt wird, und zwar zumindest auch in Abhängigkeit von den jeweiligen betrieblichen Daten des Fahrzeugs.

14. Verfahren nach Anspruch 13,
**dadurch gekennzeichnet, dass**
- die Videodaten nach Bildqualität und/oder der Ton und/oder Inhalt der Videodaten unter Bildung videospezifischer Daten analysiert werden und
- die jeweilige Speicherstrategie für die aufgenommenen Videodaten sowohl in Abhängigkeit von den jeweiligen betrieblichen Daten als auch in Abhängigkeit von den jeweiligen videospezifischen Daten festgelegt wird.

15. Verfahren nach Anspruch 13 oder 14,
**dadurch gekennzeichnet, dass** der Speicherzustand der Speicher unter Bildung von speicherspezifischen Daten geprüft wird und die jeweilige Speicherstrategie für die aufgenommenen Videodaten zumindest auch in Abhängigkeit von den jeweiligen speicherspezifischen Daten festgelegt wird.

16. Verfahren nach einem der voranstehenden Ansprüche,
**dadurch gekennzeichnet, dass**
die Videodaten unter Reduktion des Speicherbedarfs nachbearbeitet werden, indem die Bildauflösung und/oder die Bildrate und/oder die Tonqualität reduziert wird.

17. Verfahren nach einem der voranstehenden Ansprüche,
**dadurch gekennzeichnet, dass**
die Videodaten dezentral als Videosequenzen abgespeichert werden und Speicherungsdaten, die ein Widerauffinden der abgespeicherten Videosequenzen ermöglichen, zentral verwaltet werden.
